# EUROPÄISCHE PATENTANMELDUNG

(11) **EP 3 705 755 A1**
(43) Veröffentlichungstag der Anmeldung: **09.09.2020**
(21) Anmeldenummer: 19161089.8
(22) Anmeldetag: 06.03.2019
(51) Int. Cl.: F16H 57/033, F16H 37/04

(54) **KONFIGURATION VON GANGSCHALTVARIANTEN**

(71) Anmelder: Deere & Company, Moline, IL 61265 (US)
(72) Erfinder: Müller, David, 68163 Mannheim (DE); Gugel, Rainer, 68163 Mannheim (DE); Buhrke, Frank, 68163 Mannheim (DE); Schumann, Michael, 68163 Mannheim (DE)
(74) Vertreter: Lavall, Christian Henner

(57) **Zusammenfassung**

Die Erfindung betrifft eine Konfiguration unterschiedlicher Anzahlen an Gangschaltvarianten bei einem gestuften Lastschaltgetriebe für eine landwirtschaftliche Arbeitsmaschine (10). Das Lastschaltgetriebe umfasst eine Vorschaltgruppe (44), ein Vorgelege (46) und eine Nachschaltgruppe (48). Das Lastschaltgetriebe umfasst ein Gehäuse, eine Antriebswelle (40), eine Abtriebswelle (50) und eine Vorgelegewelle (58) sowie eine hydraulische Steuerungsanordnung. Für alle Anzahlen an Gangschaltvarianten wird die gleiche Getriebeeinheit eingesetzt. Die räumliche Ausrichtung der Wellen (40, 58, 50, 66) ist für alle Anzahlen an Gangschaltvarianten identisch. Eine Anpassung der Gangschaltvarianten erfolgt ausschließlich durch eine Variation der Vorschaltgruppe (44) und/oder Nachschaltgruppe (48).

## Beschreibung

Die Erfindung betrifft die Konfiguration unterschiedlicher Anzahlen an Gangschaltvarianten bei einem gestuften Lastschaltgetriebe für ein landwirtschaftliches Nutzfahrzeug.

Lastschaltgetriebe sind eine spezielle Form von Fahrzeuggetrieben, bei denen die Übersetzung unter Last, also während der Fahrt, ohne Unterbrechung des Drehmoments geändert werden kann. Dadurch können auch während des Schaltvorgangs Vortriebskräfte übertragen werden, sodass das Fahrzeug auch während des Schaltvorgangs weiter beschleunigen kann. Somit ergeben sich beim Schaltvorgang keine Komforteinbußen. Bei landwirtschaftlichen Nutzfahrzeugen, insbesondere bei Traktoren, werden vorwiegend Lastschaltgetriebe eingesetzt, weil sie insbesondere bei der Arbeit in hügeligem Gelände und auf wechselnden Bodenarten eine schnellere Arbeit ermöglichen und helfen, Kraftstoff zu sparen. Manche Traktorgetriebe sind auch nur teillastschaltbar, das bedeutet, dass nur zwischen manchen Gängen ohne Zugkraftunterbrechung geschaltet werden kann, während andere (zum Beispiel Gruppenwechsel) mit einer Zugkraftunterbrechung verbunden sind.

Es ist bekannt, derartige Getriebe in Verbindung mit Planetengetrieben und Kupplungen in einem Baukastensystem auszubilden, sodass das Lastschaltgetriebe, durch entsprechende Ausbildung und Anordnung von Zahnradpaarungen des Planetengetriebes in verschiedenen Betriebsmodi, wie Durchtriebsmodus, Untersetzungsmodus und Reversiermodus betrieben werden können. So werden an Traktoren Lastschaltgetriebe als Getriebevorstufe eingesetzt, die je nach Ausbildung eines Stufenplanetensatzes entweder in den Betriebsmodi Durchtriebsmodus bzw. Reversiermodus oder in den Betriebsmodi Durchtriebsmodus bzw. Untersetzungsmodus betrieben werden können.

Diese Getriebe zeichnen sich dadurch aus, dass in einer ersten Schaltung eine mit einer Eingangswelle verbundene Kupplung die Eingangswelle mit der Ausgangswelle verbindet, sodass das Getriebe im Durchtriebsmodus betrieben werden kann, wobei das Planetengetriebe freiläuft. In einer zweiten Schaltung wird die Kupplung gelöst, sodass der Planetenträger durch die Eingangswelle angetrieben wird und sich der Planetensatz um ein durch eine Bremse festgestelltes erstes Sonnenrad wälzt, durch welches sich die Abtriebswelle erstreckt. Der Abtrieb erfolgt über ein zweites mit der Abtriebswelle verbundenes Sonnenrad, welches von dem Planetensatz angetrieben wird. Je nach Zuordnung des Planetensatzes bzw. Ausbildung der Zahnradsätze von Planetensatz und Sonnenrädern kann das Lastschaltgetriebe im Untersetzungsmodus oder im Reversiermodus betrieben werden.

Somit wird ein zweistufiges Lastschaltgetriebe bereitgestellt, welches jedoch zum einen fertigungstechnisch aufwendig ausgebildet ist und zum anderen einen weiteren Betriebsmodus, beispielsweise ein Kriechgangmodus, in der genannten Anordnung nicht zulässt.

In der EP 0 745 198 B1 wird ein Lastschaltgetriebe für mobile Arbeitsmaschinen beschrieben, sowie ein Verfahren zur Steuerung dieses Lastschaltgetriebes. Dabei kommen Hydromotoren zum Einsatz, die über eine Kupplung miteinander verbunden sind. In einem unteren Geschwindigkeitsbereich werden die Hydromotoren drehmomentaddierend zusammengeschaltet. Einer der Hydromotoren wird über eine weitere Kupplung umgestaltet, sodass die Hydromotoren in einer oberen Geschwindigkeitsbereichsdrehzahl addierend betrieben werden können.

In der WO 2013/064371 A1 wird ein Lastschaltgetriebe mit einer Ausgangswelle und einer dazu koaxial angeordneten Ausgangswelle beschrieben. Das Lastschaltgetriebe weist einen Planetengetriebesatz auf. Das Planetengetriebe umfasst einen Planetenträger, der mit der Eingangswelle in Verbindung steht. Mit einem Schaltelement ist die erste Ausgangswelle mit der ausgangsseitigen Sonne eines Stufenplanetensatzes verbindbar. Mit einem zweiten Schaltelement ist die erste Ausgangswelle direkt mit der Eingangswelle verbindbar. Das eingangsseitige Sonnenrad des Stufenplanetensatzes ist drehfest mit einem Gehäuseteil des Lastschaltgetriebes verbunden.

Aufgabe der Erfindung ist es, eine Getriebeeinheit bereitzustellen, die einen möglichst breiten Einsatz ermöglicht und gegebenenfalls auch für unterschiedliche Fahrzeugtypen einsetzbar ist. Dadurch soll eine effektive Produktion der Fahrzeuge gewährleistet werden. Dabei soll sich die Getriebeeinheit durch kompakte Ausmaße und eine möglichst einfache Montage auszeichnen. Zudem soll sich die Getriebeeinheit durch eine zuverlässige Betriebsweise und möglichst lange Lebensdauer auszeichnen. Unterschiedliche Getriebestufen sollen leicht in die Einheit integrierbar sein, wobei auch ein einfacher Wechsel zwischen Vorwärtsfahrt und Rückwärtsfahrt ermöglicht werden soll.

Diese Aufgabe wird erfindungsgemäß durch ein Verfahren, einer Getriebeeinheit und einer Verwendung gemäß den Nebenansprüchen gelöst. Bevorzugte Varianten sind den Unteransprüchen, der Beschreibung und den Zeichnungen zu entnehmen. Erfindungsgemäß wird für unterschiedliche Anzahlen an Gangschaltvarianten jeweils die gleiche Getriebeeinheit eingesetzt. Die Getriebeeinheit wird durch ein festes Gehäuse begrenzt, das für alle Getriebeeinheiten identisch ist und demzufolge die gleichen räumlichen Abmessungen hat. Innerhalb dieses Gehäuses sind für alle Gangschaltvarianten die Wellen identisch und komplett gleich räumlich ausgerichtet. Dabei stimmen für alle Varianten sowohl die räumliche Ausrichtung der Wellen zueinander als auch die Wellen innerhalb des Gehäuses vollständig überein.

Dadurch können im gleichen Layout unterschiedliche Anzahlen an maximalen Gangschaltungsvarianten realisiert werden, also beispielsweise 12-Gang- und/oder 18-Gang- und/oder 24-Gang- und/oder 32-Gang-Varianten. Die erfindungsgemäße Getriebeeinheit ist mit ihren Abmessungen also bezüglich des Gehäuses und der Anordnung der Wellen innerhalb des Gehäuses so ausgestaltet, dass jeweils mit der gleichen Getriebeeinheit unterschiedliche maximale Anzahlen an Gangvarianten für unterschiedliche Fahrzeugtypen gestaltet werden können.

Das Gehäuse sowie die Wellen der Vorschaltgruppe, des Vorgeleges und der Nachschaltgruppe sind fest vorgegeben. Durch Hinzufügen und Weglassen von Zahnradstufen können unterschiedliche Anzahlen an Gangschaltvarianten realisiert werden.

Bei einer besonders bevorzugten Variante der Erfindung ist auch bei allen Varianten die hydraulische Ansteuerungsanordnung identisch. Somit wird eine Getriebeeinheit als Grundmodul bereitgestellt, bei der sowohl die Anordnung der Wellen als auch das Gehäuse als auch die komplette hydraulische Ansteuerung für alle Varianten identisch ist. Durch das gezielte Hinzufügen und Weglassen von Zahnradstufen können dann unterschiedliche Anzahlen an Gangvarianten realisiert werden.

Bisher musste für jedes Getriebe jeweils die komplette Ausrichtung der Wellen als auch die hydraulische Ansteuerung angepasst werden. Dies ist sehr aufwendig und bringt sehr hohe Kosten bei der Produktion des Getriebes mit sich. Das erfindungsgemäße Getriebemodul ist dagegen so ausgestaltet, dass jeweils nur ein Modul für unterschiedliche Varianten eingesetzt werden kann.

Somit wird ein modularer Baukasten bereitgestellt, der eine kostensparende Produktion ermöglicht. Gleichzeitig wird eine stabile Getriebeeinheit bereitgestellt, die sich durch kompakte Abmessungen auszeichnet und einen flexiblen Einsatz ermöglicht.

Vorzugsweise eignet sich die Getriebeeinheit zur Konfiguration von mindestens zwei unterschiedlichen Anzahlen an Gangschaltvarianten, also beispielsweise 18 und 32. Vorzugsweise können auch mehre Anzahlen konfiguriert werden, also beispielsweise 12, 18 und 32 und/oder 12, 18, 24 und 32 Gangschaltvarianten.

Bei einer besonders bevorzugten Variante der Erfindung kommt als Eingangswelle eine Vollwelle zum Einsatz. Somit wird bewusst auf eine Hohlwelle als Eingangswelle verzichtet.

Bei einer Variante der Erfindung drehen alle Gangstufen immer in die gleiche Richtung. Dies bietet die Möglichkeit einer optimierten Verzahnung. Weiterhin sind keine Lastwechsel beim Reversieren erforderlich. Die Festräder auf der Eingangswelle oder die im Eingriff befindlichen Losräder auf der Nebenwelle können zum Beispiel zum Antrieb von Aux-Drives verwendet werden, also beispielsweise für Pumpen, Kompressoren oder die Wasserpumpe. Dadurch ist auch eine Realisierung zum Antrieb einer tief angeordneten Pumpe möglich.

Bei einem bevorzugten Schaltszenario ist lediglich eine Anpassung der Gruppenstufen nötig, um ein PST in ein PPST umzuwandeln. Die High und Low Schaltungen und die Gangstufen bleiben ansonsten gleich.

Die Kupplungen des Lastschaltgetriebes können auf der einen oder der anderen Welle sitzen. Die erfindungsgemäße Ausgestaltung ermöglicht eine Wiederverwendung von Zahnrädern durch eine kompakte Ausgestaltung. Die Reverse-Möglichkeit kann über eine Vorgelegewelle in High/Low integriert werden. Es ist auch denkbar, dass ein vorgeschalteter Power-Reverser integriert wird.

Die erfindungsgemäße Getriebeeinheit kann als Drei- oder Vier-Wellen-Anordnung ausgeführt sein. Durch dieses Konzept wird eine große Flexibilität ermöglicht. Das Baukastensystem ist bei verschiedenen Fahrzeugen einsetzbar und auf die jeweilige Anforderung anpassbar.

Im Drei-Wellen-Design kann der Direktgang über High verwirklicht sein und mit Low über die Vorgelegewelle. Es ist auch denkbar, dass im Drei-Wellen-Design der Direktgang in Low verwirklicht wird und der High-Gang über die Vorgelegewelle.

Dadurch wird eine große Flexibilität und eine gute Schachtelung ermöglicht.

Die erfindungsgemäße Konstruktion funktioniert für zentrale und seitlich versetzte Hauptwellen. Das erfindungsgemäße Verfahren zur Konfiguration mit einer einzigen Getriebeeinheit ermöglicht es, unterschiedliche Getriebetypen in einer Struktur zu realisieren. Dazu werden unterschiedliche Anzahlen an Kupplungen und Synchros verwendet. Die Synchros können handgeschaltet oder automatisiert geschaltet sein.

In einem Vier-Wellen-Design sind auch Direktgänge (Eingangs-Ausgangswelle) möglich.

Weitere Merkmale und Vorteile der Erfindung ergeben sich aus der Beschreibung von Ausführungsbeispielen anhand von Zeichnungen und aus den Zeichnungen selbst.

Dabei zeigt:
Figur 1 eine schematische Darstellung einer landwirtschaftlichen Arbeitsmaschine,
Figur 2 eine Drei-Wellen-Variante eines Lastschaltgetriebes mit 18 Gangschaltvarianten,
Figur 3 eine Drei-Wellen-Variante eines Lastschaltgetriebes mit 32 Gangschaltvarianten,
Figur 4 eine Vier-Wellen-Variante eines Lastschaltgetriebes mit 18 maximalen Gangschaltvarianten,
Figur 5 eine Vier-Wellen-Variante eines Lastschaltgetriebes mit 32 Gangschaltvarianten.

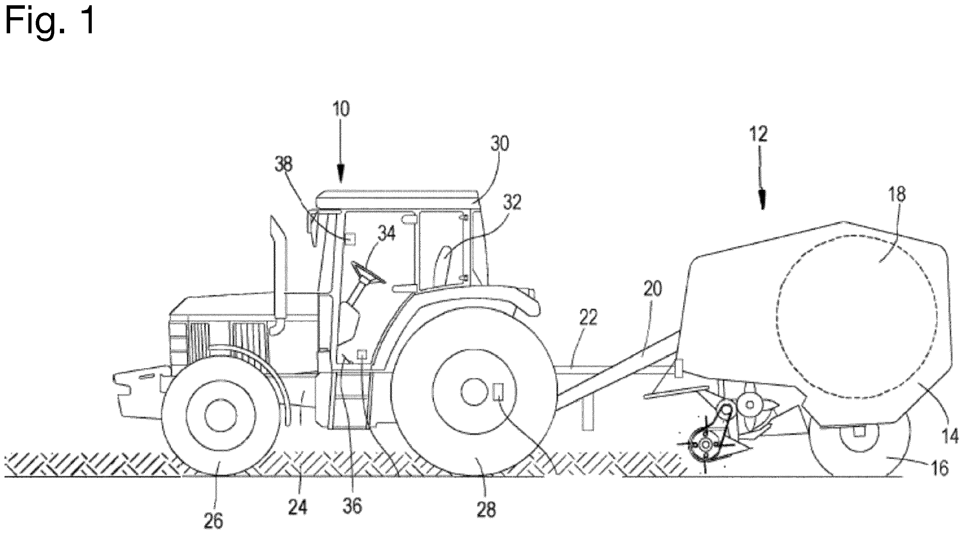

Figur 1 zeigt eine landwirtschaftliche Arbeitsmaschine in Form eines Traktors 10 und eines vom Traktor gezogenen beliebigen Gerätes 12, das im Ausführungsbeispiel rein exemplarisch als Rundballenpresse ausgeführt ist. Das Gerät 12 umfasst ein auf Rädern 16 abgestütztes Fahrgestell 14 mit einer Ballenbildungskammer 18. Das Gerät 12 wird über eine Deichsel 20 vom Traktor 10 gezogen. Ihre antreibbaren Elemente werden mittels einer Zapfwelle 22 vom Traktor 10 angetrieben.

Der Traktor 10 umfasst ein Fahrgestell 24, das sich auf vorderen, lenkbaren Rädern 26 und rückwärtig angetriebenen Rädern 28 abstützt. Ein Bedienerarbeitsplatz mit einem Sitz 32 befindet sich in einer Kabine 30. Vom Sitz aus sind ein Lenkrad 34, ein Gaspedal 36 und eine Bedienerstelle 38 betätigbar.

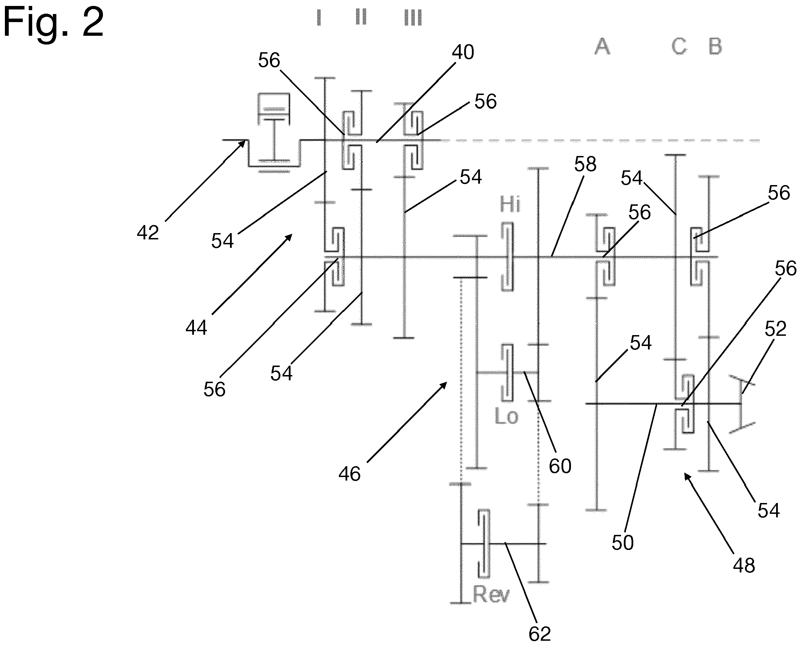

Figur 2 zeigt eine schematische Darstellung eines Lastschaltgetriebes. Dabei handelt es sich gemäß der Darstellung in Figur 2 um eine Drei-Wellen-Ausführung eines Lastschaltgetriebes mit insgesamt achtzehn Gangschaltvarianten. Die Drei-Wellen-Variante gemäß Figur 2 besitzt eine gerade Anzahl an Zahneingriffen. Eine Antriebswelle 40 steht mit einem Antrieb 42 in Verbindung, der im Ausführungsbeispiel als Verbrennungsmotor ausgeführt ist. Das Lastschaltgetriebe gemäß Figur 2 umfasst eine Vorschaltgruppe 44, eine Vorgelege 46 und eine Nachschaltgruppe 48. Über eine Abtriebswelle 50 wird das Drehmoment auf ein Kegelrad 54 übertragen. Die Vorschaltgruppe umfasst gemäß der Ausführung in Figur 2 insgesamt drei Gangstufen I, II und III mit drei Zahnrädern 54 und drei Kupplungen 56.

Es ist eine Reverse-Stufe in das Vorgelege integriert. Die Nachschaltgruppe 48 umfasst insgesamt drei Gruppenstufen A, B und C mit drei Zahnrädern 54 und drei Kupplungen 56. Neben der Antriebswelle 40 und der Abtriebswelle 50 umfasst das Lastschaltgetriebe noch eine Vorgelegewelle 58. Weiterhin sind in dem Lastschaltgetriebe noch die Low-Welle 60 und die Reverse-Welle 62 vorhanden.

Das Lastschaltgetriebe gemäß Figur 2 ist auf achtzehn Gangschaltvarianten konfiguriert. Die Anzahl der Gangschaltvarianten ergibt sich durch Multiplikation der Anzahl an Gangstufen der Vorschaltgruppe 24 multipliziert mit den Schaltstufen des Vorgeleges 46 mal der Anzahl der Gruppenstufen der Nachschaltgruppe 48. Im Ausführungsbeispiel gemäß Figur 2 ergeben sich somit 3 x 2 x 3 und somit insgesamt achtzehn Gangschaltvarianten.

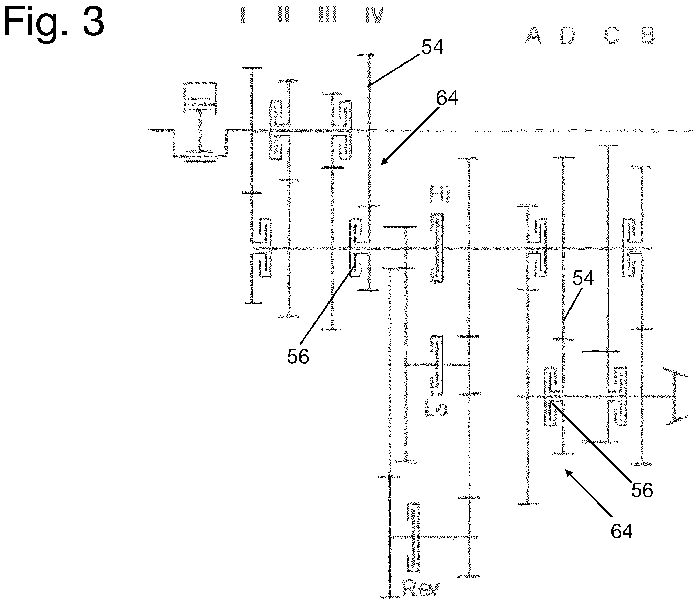

Gemäß der Darstellung in Figur 3 sind in der gleichen Getriebeeinheit, die von dem identischen Gehäuse wie in Figur 2 fest begrenzt wir und die gleiche Wellenanordnung wie in Figur 2 aufweist, insgesamt zweiunddreißig Gangschaltvarianten konfiguriert. Erfindungsgemäß sind die Abmessungen in der Getriebeeinheit so gewählt, dass eine weitere Zahnradgruppe 64 sowohl in der Vorschaltgruppe 44 als auch in der Nachschaltgruppe 48 hinzugefügt werden kann. Jede zusätzliche Zahnradgruppe 64 umfasst ein Zahnrad 54 und eine Kupplung 56.

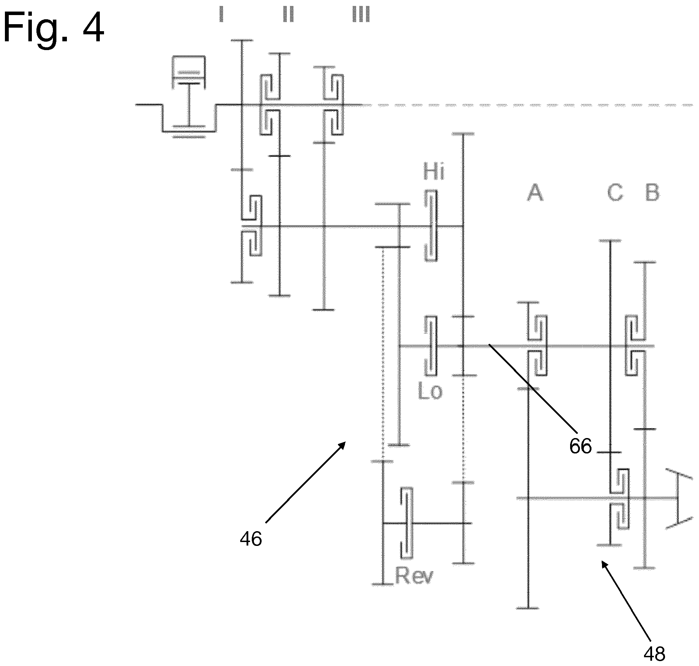

Bei der Variante gemäß Figur 3 hat das Lastschaltgetriebe insgesamt zweiunddreißig Gangschaltvarianten. Die Gesamtzahl der Gangschaltvarianten ergibt sich aus der Anzahl der Gangstufen der Vorschaltstufe 44, welche im Ausführungsbeispiel gemäß Figur 3 insgesamt vier Gangstufen I, II, III und IV umfasst, wobei jede Gangstufe als Zahnradstufe 64 mit einem Zahnrad 54 und einer Kupplung 56 ausgestattet ist. Die Anzahl der Gangstufen der Vorschaltstufe 44 wird multipliziert mit den beiden Gängen des Vorgeleges (High und Low) und dann weiterhin mit der Anzahl der Gruppenstufen. Im Ausführungsbeispiel gemäß Figur 4 sind dies vier Gruppenstufen A, B, C, D. Somit ergibt sich eine Gesamtzahl an Gangschaltvarianten von 4 x 2 x 4 und somit von zweiunddreißig Gangschaltvarianten.

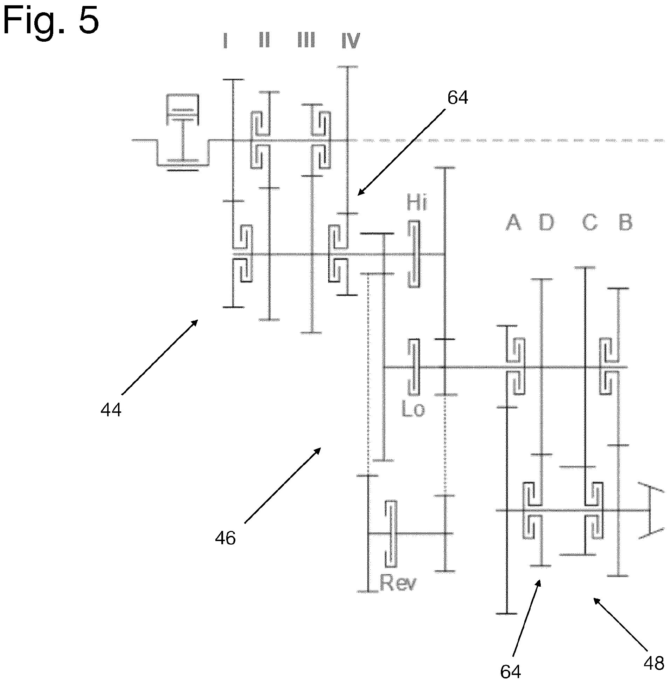

Die Figuren 4 und 5 zeigen jeweils Vier-Wellen-Ausführungen. Diese werden gelegentlich auch als Zwei-Wellen-Ausführungen bezeichnet. Bei dieser Ausführung gemäß den Figuren 4 und 5 gibt es eine ungerade Anzahl an Zahneingriffen. Bei den Varianten gemäß den Figuren 4 und 5 ist gegenüber den Varianten in den Figuren 2 und 3 eine zusätzliche Welle 66 vorhanden. Die Welle 66 ist vorzugsweise Teil der Nachschaltgruppe 48. Auf der Welle 66 befindet sich die Low-Stufe des Vorgeleges 46.

Bei der Variante gemäß Figur 4 ergeben sich aus den drei Gangstufen der Vorschaltstufe 44, nämlich I, II und II, die jeweils einen Zahnradsatz 64 mit einem Zahnrad 54 und einer Kupplung 56 umfasst, sowie den beiden Schaltstufen der Vorlegegruppe 46, der High- und Low-Stufe und den drei Gruppenstufen der Nachschaltgruppe 48 nämlich A, B und C, insgesamt achtzehn Schaltvarianten durch Multiplikation: 3 x 2 x 3.

Erfindungsgemäß wird für die Konfiguration gemäß Figur 5 die gleiche Getriebeeinheit wie in Figur 4 eingesetzt, wobei sämtliche Wellen die gleiche räumliche Ausrichtung in einem identischen festen Gehäuse haben, welche die Getriebeeinheit umgibt. Erfindungsgemäß sind die Abmessungen der Getriebeeinheit so gestaltet, dass eine zusätzliche Zahnradstufe 64 sowohl in der Vorschaltgruppe 44 als auch in der Nachschaltgruppe 48 integrierbar ist. Somit ergeben sich mit 4 x 2 x 4 insgesamt zweiunddreißig Gangschaltmöglichkeiten.

## Patentansprüche

1. Verfahren zur Konfiguration unterschiedlicher Anzahlen an Gangschaltvarianten bei einem gestuften Lastschaltgetriebe für eine landwirtschaftliche Arbeitsmaschine (10), mit einer Getriebeeinheit, einer Vorschaltgruppe (44), einem Vorgelege (46), einer Nachschaltgruppe (48), einen Gehäuse, einer Antriebswelle (40), einer Vorgelegewelle (58) und einer Abtriebswelle (50), sowie einer hydraulischen Steuerungsanordnung, **dadurch gekennzeichnet, dass** für alle Anzahlen an Gangschaltvarianten die gleiche Getriebeeinheit eingesetzt wird und die räumliche Ausrichtung der Wellen (40, 58, 50, 66) für alle Anzahlen an Gangschaltvarianten identisch ist und eine Anpassung der Gangschaltvarianten ausschließlich durch eine Variation der Vorschaltgruppe (44) und/oder Nachschaltgruppe (48) erfolgt.

2. Verfahren nach Anspruch 1, **dadurch gekennzeichnet, dass** die Konfiguration unterschiedlicher Anzahlen an Gangschaltvarianten durch Hinzufügen und/oder Weglassen von Zahnradstufen (64) erfolgt.

3. Verfahren nach Anspruch 1 oder 2, **dadurch gekennzeichnet, dass** für alle Konfigurationen die gleiche hydraulische Steueranordnung verwendet wird.

4. Getriebeeinheit eines gestuften Lastschaltgetriebes für eine landwirtschaftliche Arbeitsmaschine (10) zur Durchführung eines Verfahrens nach einem der Ansprüche 1 bis 3, **dadurch gekennzeichnet, dass** die Getriebeeinheit als modularer Baukasten zur Konfiguration von mindestens zwei unterschiedlichen Anzahlen an Gangschaltvarianten eingerichtet ist.

5. Getriebeeinheit nach Anspruch 4, **dadurch gekennzeichnet, dass** die Getriebeeinheit als modularer Baukasten zur Konfiguration von mindestens drei, vorzugsweise von vier unterschiedlicher Anzahlen an Gangschaltvarianten eingerichtet ist.

6. Getriebeeinheit nach Anspruch 4 oder 5, **dadurch gekennzeichnet, dass** ein Rückwärtsgang über das Vorgelege (46) integriert ist.

7. Getriebeeinheit nach einem der Ansprüche 4 bis 6, **dadurch gekennzeichnet, dass** alle Stufen einer Vorschaltgruppe (44) für die gleiche Drehrichtung eingerichtet sind.

8. Verwendung einer Getriebeeinheit nach einem der Ansprüche 4 bis 7 zur Konfiguration von mindestens zwei unterschiedlichen Anzahlen an Gangschaltvarianten.

9. Verwendung einer Getriebeeinheit zur Durchführung eines Verfahrens nach einem der Ansprüche 1 bis 3.
